# EUROPEAN PATENT APPLICATION

(11) **EP 4 646 923 A1**
(43) Date of publication of application: **12.11.2025**
(21) Application number: 25174632.7
(22) Date of filing: 06.05.2025
(51) Int. Cl.: A01K 1/01

(54) **ANTI-ODOUR DEVICE FOR LITTER TRAYS AND/OR CAGES FOR ANIMALS, LITTER TRAY FOR ANIMALS AND ODOUR ABATEMENT METHOD FOR LITTER TRAYS AND/OR CAGES**

(30) Priority: 07.05.2024 IT 202400010216
(71) Applicant: Ferplast S.p.A., 36070 Castelgomberto (VI) (IT)
(72) Inventor: VACCARI, Nicola, 36070 CASTELGOMBERTO (Vicenza) (IT)
(74) Representative: Sandri, Sandro

(57) **Abstract**

An anti-odour device (1) for litter trays and/or cages for animals comprising a suction body (2), fixing means (8) configured to fix the suction body (2) to at least one wall of the litter tray and/or the cage for animals and odour abatement means (9) activatable on the airflow to be processed (F1) at least to abate an odour present in it generating a processed airflow (F2). Furthermore, the anti-odour device (1) comprises a suction fan (7) operatively associated with the suction body (2) to suck axially from the litter tray and/or the cage for animals the airflow to be processed (F1) through at least one axial opening (5) of the suction body (2) and to emit radially into the litter tray and/or the cage for animals the processed airflow (F2) through at least one radial opening (6) of the suction body (2), so that the processed airflow (F2) is at least partially parallel to a fixing plane of the suction body (2).

## Description

### TECHNICAL FIELD

The present invention relates to an anti-odour device for litter trays and/or cages for animals, a litter tray for animals and an odour abatement method for litter trays and/or cages.

In particular, the anti-odour devices are configured to manage the odours coming from the litter trays or from the cages, generally due to the droppings of pets, so as to reduce the unpleasant odours, contributing to making the litter trays and cages a more comfortable environment for the pets. In particular, such devices play an important role in maintaining a more healthy environment for both the animals and the owners.

Furthermore, anti-odour devices contribute to preventing the risk of refusal of the litter trays, since pets, in particular cats, tend to avoid using the litter trays due to the presence of unpleasant odours.

### STATE OF THE ART

Different types of anti-odour devices are currently present on the market.

For example, ozone anti-odour devices allow the odours to be abated through the introduction of ozone into the air. Although ozone is efficient in the abatement of odours, it is nonetheless very harmful for the health of both humans and pets.

Furthermore, air ionising anti-odour devices also exist. However, these devices are subject to the accumulation of electrostatic energy that can discharge onto the pet, frightening it and increasing the risk of refusal of the litter tray. Furthermore, ionising devices can produce ozone as a byproduct and, as previously indicated, be harmful for the health of the pet.

Several alternative solutions can provide for the use of activated carbons through which the air is made to flow to abate the odours contained in it and then introduced once again inside the litter tray.

Disadvantageously, these devices have large dimensions that result in the need for their attachment to the upper wall of the litter tray or the cage so as to limit the encumbrances to the movement of the animal. In particular, the dimensions of these devices heavily limit the adaptability thereof to different shapes of litter trays and cages.

Disadvantageously, furthermore, the performance of these devices is heavily limited, since they are unable to produce an efficient mixing of the reintroduced air with the air already present in the litter tray or in the cage.

### DESCRIPTION OF THE INVENTION

In this context, the technical task underlying the present invention is to propose an anti-odour device for litter trays and/or cages for animals, a litter tray for animals and an odour abatement method for litter trays and/or cages which overcome the aforementioned drawbacks of the prior art.

In particular, an object of the present invention is to provide an anti-odour device for litter trays and/or cages for animals, a litter tray for animals and an odour abatement method for litter trays and/or cages that guarantee an increase in the efficiency of odour abatement.

A further object of the present invention is to provide an anti-odour device for litter trays and/or cages for animals, a litter tray for animals and an odour abatement method for litter trays and/or cages having high operational flexibility.

A further object of the present invention is to provide an anti-odour device for litter trays and/or cages for animals, a litter tray for animals and an odour abatement method for litter trays and/or cages that guarantee a high safety for the animals that use them.

A further object of the present invention is to provide an anti-odour device for litter trays and/or cages for animals having particularly limited dimensions.

The stated technical task and specified objects are substantially achieved by an anti-odour device for litter trays and/or cages for animals, a litter tray for animals and an odour abatement method for litter trays and/or cages comprising the technical features disclosed in one or more of the appended claims.

The dependent claims correspond to possible embodiments of the invention.

### ILLUSTRATION OF THE DRAWINGS

Further features and advantages of the present invention will become more apparent from the indicative and thus non-limiting description of an anti-odour device for litter trays and/or cages for animals, a litter tray for animals and an odour abatement method for litter trays and/or cages as illustrated in the appended drawings, in which:
- Figure 1 shows a side view of an anti-odour device for litter trays and/or cages for animals in accordance with a possible embodiment of the present invention;
- Figure 2 shows a partially exploded sectional side view of the anti-odour device of Figure 1;
- Figures 3 to 4 show respectively a front view and a rear view of the anti-odour device of Figure 1.

### DESCRIPTION OF AN EMBODIMENT OF THE INVENTION

With reference to the appended figures, an anti-odour device for litter trays and/or cages for animals has been indicated overall with reference number 1, which will be indicated below as anti-odour device 1.

The anti-odour device 1 comprises a suction body 2 adapted to be arranged inside a litter tray and/or a cage for animals.

As illustrated in the appended figures, the suction body 2 extends axially along a longitudinal extensions axis "L" between a first end 3 and a second end 4.

Preferably, the suction body 2 has a substantially symmetrical shape.

The suction body 2 has at least one axial opening 5 arranged at the first end 3 and at least one radial opening 6 interposed between the first end 3 and the second end 4. In particular, the at least one axial opening 5 is in fluid communication with the at least one radial opening 6 to allow the passage of an airflow to be processed "F1" through the suction body 2.

For example, the at least one axial opening 5 extends transversely, preferably perpendicular, to the aforesaid longitudinal extension axis "L".

Preferably, the at least one axial opening 5 is defined by a plurality of axial openings axially associated to allow an inflow of the airflow to be processed "F1" through the suction body 2.

The suction body 2 defines a containment volume "V" adapted to accommodate at least one suction fan 7, as will be described in detail below.

The anti-odour device 1 further comprises fixing means 8 configured to fix the suction body 2 to at least one wall of the litter tray and/or cage for animals. In particular, the fixing means 8 define a fixing plane of the suction body 2 transversal, preferably perpendicular, to the longitudinal extension axis "L".

For example, the fixing plane can be parallel to the wall of the litter tray and/or cage for animals.

Preferably, the fixing means 8 can be arranged at the second end 4 of the suction body 2.

In other words, the at least one radial opening 6 can be at least partially interposed between the at least one axial opening 5 and the fixing means 8 along the aforesaid longitudinal extension axis "L".

In yet other words, the fixing means 8 can be opposite to the at least one axial opening 5 with respect to the suction body 2.

Furthermore, the anti-odour device 1 comprises odour abatement means 9 activatable on the airflow to be processed "F1" at least to abate an odour present in it generating a processed airflow "F2".

As illustrated in the appended figures, the anti-odour device 1 comprises a suction fan 7 at least partially, preferably entirely, accommodated in the containment volume "V".

Preferably, the suction fan 7 is configured to rotate around a rotation axis substantially parallel to the aforesaid longitudinal extension axis "L".

Advantageously, the suction fan 7 is operatively associated with the suction body 2 to suck axially from the litter tray and/or the cage for animals the airflow to be processed "F1" through the at least one axial opening 5 and to emit radially into the litter tray and/or the cage for animals the processed airflow "F2" through the at least one radial opening 6 so that the processed airflow "F2" is at least partially parallel to a fixing plane of the suction body 2.

In this manner, the anti-odour device 1 facilitates an effective mixing of the processed airflow "F2" with the air present in the litter tray and/or in the cage for animals guaranteeing an increase in the efficiency of odour abatement.

Furthermore, the introduction of the processed airflow "F2" at least partially parallel to the fixing plane of the suction body 2 prevents the production of airflows directed directly towards the animal, facilitating the comfort for said animal when the litter tray and/or cage is used during operation of the anti-odour device 1.

In particular, the processed airflow "F2" can be introduced into the litter tray and/or cage for animals along a direction substantially transversal, preferably perpendicular, to the longitudinal extension axis "L".

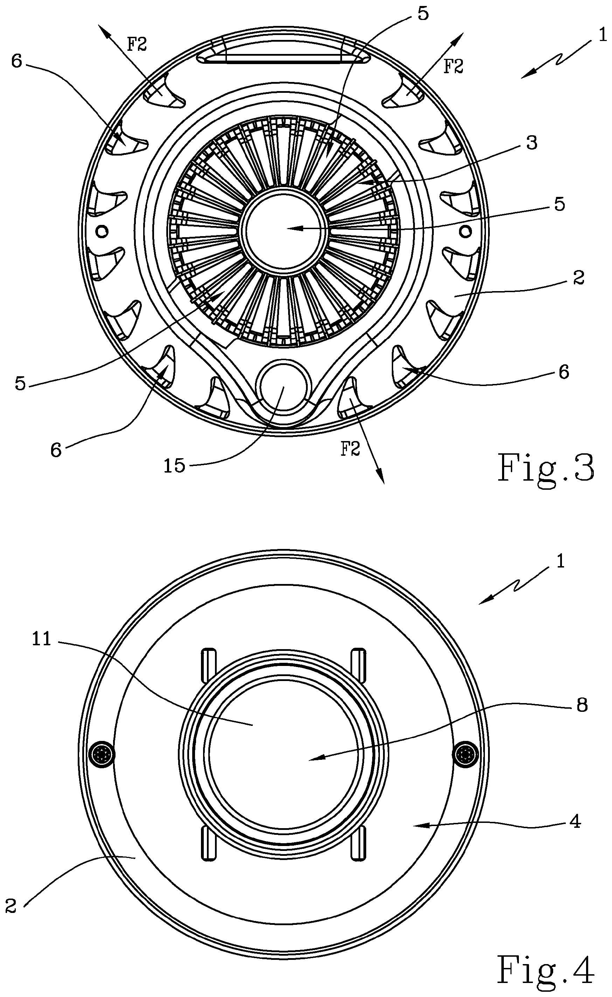

Purely by way of non-limiting example, the suction body 2 can have a cylindrical and/or discoidal and/or spherical segment shape with one or two bases. In this manner, as illustrated in Figure 3, the at least one axial opening 5 can be arranged in a central zone of the suction body 2 and the at least one radial opening 6 can be arranged in a perimeter zone of the suction body 2 facilitating a substantially homogeneous radial distribution of the processed airflow "F2". Purely by way of non-limiting example, the suction body 2 can extend for a length less than 50 millimetres along the aforesaid longitudinal extension axis "L" and for a length less than 100 millimetres in a radial direction, giving the anti-odour device 1 a particular compactness that allows its dimensions inside the litter tray and/or cage for animals to be reduced.

According to a further advantageous aspect, the fixing means 8 can be the magnetic type, so as to guarantee an easy and intuitive reversible connection of the suction body 2 to the wall of the litter tray and/or cage, giving the anti-odour device 1 a particular operational flexibility and adaptability to the most disparate shapes of the litter trays and/or cages for animals to which it can be applied.

In particular, the fixing means 8 can comprise a first fixing element 10 connected to the suction body 2 and a second fixing element 11 connectible by means of magnetic interaction to the first fixing element 10 so that, during a condition of fixing to the litter tray and/or cage of the suction body 2, the wall of the litter tray and/or cage to which the suction body 2 is fixed is at least partially interposed between the first fixing element 10 and the second fixing element 11.

In accordance with a further advantageous aspect, the suction body 2 can comprise a plurality of radial openings 6 operatively associated to define a radial emission angle of the processed airflow "F2" higher than 90°, for example comprised between 180° and 360°, preferably comprised between 270° and 360°, even more preferably comprised between 330° and 360°. In this manner, the suction body 2 guarantees for the anti-odour device 1 a processed airflow "F2" that is particularly homogeneous in the radial direction. In particular, the radial openings 6 can be angularly distanced with respect to the longitudinal extension axis "L" according to angular intervals that are constant or variable based on the operational needs. Purely by way of non-limiting example, the suction body 2 can comprise at least three radial openings 6 angularly distanced with respect to the longitudinal extension axis "L" by 120° or the suction body 2 can comprise at least four radial openings 6 angularly distanced with respect to the longitudinal extension axis "L" by 90°.

Furthermore, the at least one radial opening can be shaped so as to give the processed flow "F2" a tangential speed component and/or a direct speed component towards the aforesaid fixing plane adapted to promote a mixing of the processed flow "F2" with the air present in the litter tray and/or in the cage and guaranteeing a high degree of comfort for the animal.

According to a further particularly advantageous aspect, the odour abatement means 9 can be arranged in proximity to the at least one axial opening 5 so as to intercept the airflow to be processed "F1" substantially at its inlet into the suction body 2.

Advantageously, the suction body 2 can comprise a removable element 12 defining at least partially the at least one axial opening 5. Preferably, the removable element defines a housing 18 adapted to accommodate at least partially the odour abatement means 9. In this manner, the removable element 12 can allow a replacement and/or maintenance of the odour abatement means 9.

Advantageously, furthermore, the removable element 12 can be reversibly connectible to the suction body 2 by means of shape coupling, preferably a bayonet coupling, greatly facilitating the operations of connection and/or removal of the removable element 12.

Furthermore, the suction body 2 can comprise an anti-odour portion defining at least partially the at least one axial opening 5 and obtained at least partially in a material adapted to abate the odours defining at least partially the odour abatement means 9. For example, the anti-odour portion can be made of a polymeric material with added activated carbons, microcapsules, enzymes and/or similar. Purely by way of non-limiting example, the anti-odour portion can define at least partially the removable element 12.

Preferably, the odour abatement means 9 comprise activated carbons configured to be activated on the airflow to be processed "F1" to produce the processed airflow "F2".

In accordance with a possible embodiment, the odour abatement means 9 can comprise a spongy body 13 with added activated carbons. Furthermore, the spongy body 13 can be soaked with oils and/or fluids adapted to abate and/or absorb and/or mask at least one odour guaranteeing a high degree of customisation of the anti-odour device 1.

The anti-odour device 1 can also comprise a control unit 14 configured to activate and/or deactivate the suction fan 7 as a function of a plurality of operating signals, for example control signals entered by a user and/or pre-set.

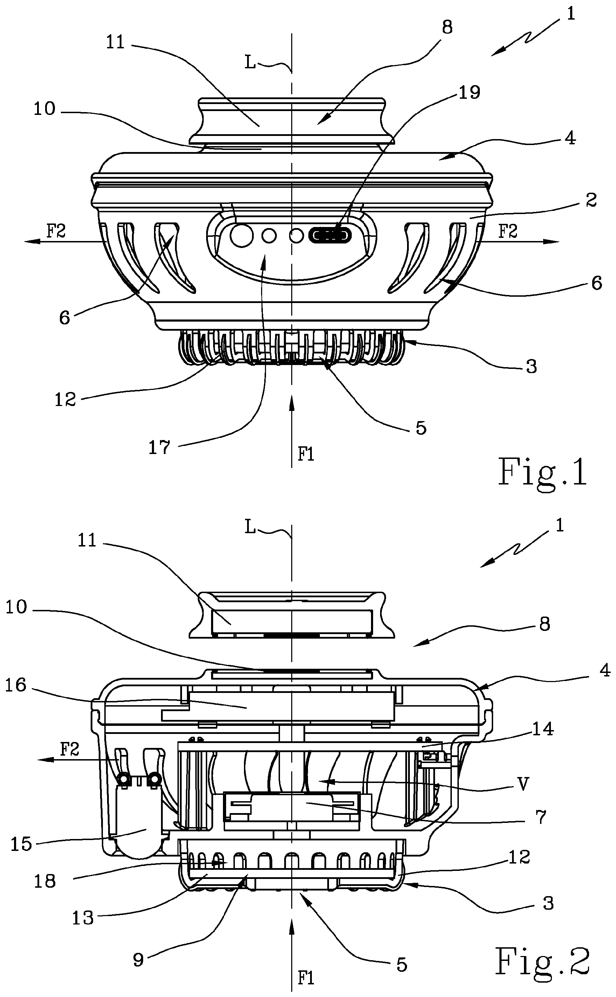

As illustrated in Figure 2, the control unit 14 can be arranged in a position proximal to the aforesaid second end 4.

Furthermore, the anti-odour device 1 can comprise a presence sensor 15 configured to detect the presence of an animal inside the litter tray and/or the cage for animals and to generate a signal representing such presence, so that the control unit 14 can activate and/or deactivate the suction fan 7 at least as a function of said detection, contributing to increasing the level of safety for the animal.

Furthermore, the anti-odour device 1 can comprise battery-powered means 16 configured to power at least the suction fan 7 and/or the aforesaid control unit 14, overcoming the need for a cabled connection connected to the electric current in order to allow powering of the anti-odour device 1, giving the present invention a marked operational flexibility. For example, the battery-powered means 16 can be charged by means of a USB (Universal Serial Bus) socket 19.

Furthermore, the anti-odour device 1 can also comprise light signalling means 17 adapted to indicate an operating state and/or a charge level of the aforesaid battery-powered means 16 and/or a plurality of further possible operating parameters.

In accordance with a further aspect, the present invention relates to a litter tray for animals comprising a plurality of walls operatively connected to define an operating volume and an anti-odour device 1 in accordance with what has been described above. Advantageously, the anti-odour device 1 is reversibly connectible to a wall of the aforesaid plurality of walls so that the processed airflow "F2" is at least partially parallel to said wall.

According to a further aspect, the present invention relates to an odour abatement method for litter trays and/or cages for animals, comprising the step of sucking an airflow to be processed "F1" along a direction transversal, preferably perpendicular, to at least one wall of a litter tray and/or a cage for animals.

Furthermore, the method comprises the step of abating at least one odour present in the airflow to be processed "F1" generating a processed airflow "F2".

Advantageously, the method comprises the step of radially emitting inside the litter tray and/or the cage for animals the processed airflow "F2" in a direction at least partially parallel to said wall.

Furthermore, the method can comprise a step of giving the processed flow "F2" a tangential speed component and/or a direct speed component towards the aforesaid wall so as to promote a mixing of the processed flow "F2" with the air present in the litter tray and/or in the cage and to guarantee a high degree of comfort for the animal.

Preferably, at least one of the steps of the method is performed by means of an anti-odour device 1 in accordance with what is described above.

It is therefore observed that the present invention achieves the proposed objects by obtaining an anti-odour device for litter trays and/or cages for animals capable of increasing the efficiency of odour abatement, thanks to the presence of a suction fan operatively associated with a suction body to suck axially from the litter tray and/or the cage for animals an airflow to be processed through at least one axial opening and to emit radially inside the litter tray and/or the cage for animals a processed airflow through at least one radial opening so that the processed airflow is at least partially parallel to the fixing plane of the suction body.

## Claims

1. Anti-odour device (1) for litter trays and/or cages for animals, said device comprising:
- a suction body (2) adapted to be arranged inside a litter tray and/or a cage for animals, said suction body (2) extending axially along a longitudinal extension axis (L) between a first end (3) and a second end (4); wherein said suction body (2) has at least one axial opening (5) arranged at said first end (3) and at least one radial opening (6) interposed between said first end (3) and said second end (4), said at least one axial opening (5) being in fluid communication with said at least one radial opening (6) to allow the passage of an airflow to be processed (F1) through said suction body (2); and wherein said suction body (2) defines a containment volume (V) adapted to accommodate at least one suction fan (7);
- fixing means (8) configured to fix said suction body (2) to at least one wall of the litter tray and/or the cage for animals, said fixing means (8) defining a fixing plane of said suction body (2) transversal, preferably perpendicular, to said longitudinal extension axis (L);
- odour abatement means (9) activatable on said airflow to be processed (F1) at least to abate an odour present in it generating a processed airflow (F2);
- a suction fan (7) at least partially accommodated in said containment volume (V), said suction fan (7) being operatively associated with said suction body (2) to suck axially from the litter tray and/or the cage for animals the airflow to be processed (F1), through said at least one axial opening (5), and to emit radially into the litter tray and/or the cage for animals said processed airflow (F2), through said at least one radial opening (6), so that said processed airflow (F2) is at least partially parallel to said fixing plane of said suction body (2).

2. The anti-odour device according to claim 1, wherein said fixing means (8) are arranged at said second end (4) of said suction body (2).

3. The anti-odour device according to claim 1 or 2, wherein said fixing means (8) comprise a first fixing element (10) connected to said suction body (2) and a second fixing element (11) connectible by means of magnetic interaction to said first fixing element (10) so that, during a condition of fixing to the litter tray and/or cage of said suction body (2), a wall of the litter tray and/or cage is at least partially interposed between said first fixing element (10) and said second fixing element (11).

4. The anti-odour device according to one or more of the preceding claims, wherein said suction body (2) comprises a plurality of radial openings operatively associated to define a radial emission angle of said processed airflow (F2) of between 180° and 360°, preferably between 270° and 360°, even more preferably between 330° and 360°.

5. The anti-odour device according to one or more of the preceding claims, wherein said suction body (2) comprises a removable element (12) defining at least partially said at least one axial opening (5); and wherein said removable element (12) defines a housing (18) adapted to accommodate at least partially said odour abatement means (9).

6. The anti-odour device according to one or more of the preceding claims, wherein said suction body (2) comprises an anti-odour portion defining at least partially said at least one axial opening (5) and made at least partially from a material capable of abating the odours, said anti-odour portion defining at least partially said odour abatement means (9).

7. The anti-odour device according to one or more of the preceding claims, wherein said odour abatement means (9) comprise a spongy body (13) with added activated carbons, said spongy body (13) preferably being adapted to be soaked with oils and/or fluids adapted to abate and/or absorb and/or mask at least one odour.

8. The anti-odour device according to one or more of the preceding claims, comprising battery-powered means (16) configured to power at least said suction fan (7).

9. Litter tray for animals comprising:
- a plurality of walls operatively connected to define an operating volume;
- an anti-odour device (1) according to one or more of the preceding claims; wherein said anti-odour device is reversibly connectible to one wall of said plurality of walls, so that said processed airflow (F2) is at least partially parallel to said wall.

10. Odour abatement method for litter trays and/or cages for animals, comprising the steps of:
- sucking an airflow to be processed (F1) along a direction transversal, preferably perpendicular, to at least one wall of a litter tray and/or a cage for animals;
- abating at least one odour present in said airflow to be processed (F1) generating a processed air flow (F2);
- radially emitting inside the litter tray and/or the cage for animals said processed airflow (F2) in a direction at least partially parallel to said wall.
